# EUROPEAN PATENT SPECIFICATION

(11) **EP 3 266 407 B1**
(45) Date of publication and mention of the grant of the patent: **27.05.2020**
(21) Application number: 16761585.5
(22) Date of filing: 02.03.2016
(51) Int. Cl.: A61C 3/025, A61C 17/02, B24C 7/00, B65G 53/00, B65G 65/40

(54) **POWDER MIXED GAS GENERATOR**
PULVERMISCHGASGENERATOR
GÉNÉRATEUR DE GAZ MÉLANGÉ À DE LA POUDRE

(30) Priority: 06.03.2015 JP 2015044943
(43) Date of publication of application: 10.01.2018
(73) Proprietor: Nakanishi Inc., Kanuma-shi, Tochigi 322-8666 (JP)
(72) Inventor: TAKAMORI, Shoichi, Kanuma-shi Tochigi 322-8666 (JP)
(74) Representative: Strobel, Wolfgang
(86) International application number: PCT/JP2016/056320
(87) International publication number: WO 2016/143615

(56) References cited:
- EP-A1- 1 346 700
- EP-A1- 1 745 747
- EP-A2- 1 145 689
- DE-A1- 3 538 324
- JP-A- H04 171 178
- JP-A- 2004 509 697
- JP-A- 2009 066 169
- KR-U- 20100 008 362
- US-A1- 2009 246 730
- US-A1- 2012 329 005

## Description

### TECHNICAL FIELD

The present invention relates to a powder-mixed-gas generator that can supply a suitable amount of powder from a vessel storing the powder to the outside, and for example, relates to a powder-mixed-gas generator for supplying powder to a tooth-surface-cleaning handpiece.

### BACKGROUND ART

Recently, a medical practice for cleaning teeth by blowing powder (fine particles) onto the teeth has been performed. For this purpose, it is necessary to supply a suitable amount of tooth-surface-cleaning powder onto a tooth-surface-cleaning handpiece, and various apparatuses have been proposed (for example, JP 2013-150871 A).

In the first embodiment of JP 2013-150871 A, a powder container contains an insert in which a mixing chamber having a shape of a hole vertically penetrating the insert is provided. A nozzle is upwardly inserted into a lower part of the mixing chamber.

When a gas is blown out from the nozzle, a negative pressure is generated and surrounding powder is attracted. As a result, a mixture of the gas and the powder ascends in the mixing chamber, so that part of the mixture moves into the outlet and is discharged through a mixture pipe.

However, the structure of the part for generating the negative pressure is complicated, and there is a concern that the gap between the nozzle and the wall surface of the lower part of the mixing chamber is clogged up with the powder after a long period of use.

According to the structure in the second embodiment of JP 2013-150871 A, there is no concern that the powder gets stuck in the gap since negative pressure is not used.

This is because, in the second embodiment of JP 2013-150871 A, gas is injected from a nozzle at an end of a gas pipe for blowing up the powder, and part of the powder is discharged via a mixture pipe.

However, in the structure in the second embodiment of JP 2013-150871 A, the discharge amount of the powder varies significantly.

This is because the nozzle is directed downward so that the powder pushed by the gas moves upward in the cylindrical powder vessel and falls after striking against a lid member. In the course of the movement, part of the powder moves into the outlet. Since there is no particular regularity in the movement of the powder, the amount of the powder entering the outlet varies, and therefore, usability is deteriorated.

Since the apparatus is used by a human being, it is necessary to stabilize the discharge amount of the powder for comfortable usage.

Further, DE 35 38 324 A1 discloses a powder-mixed-gas generator comprising a cylinder-shaped container for containing a teeth polishing powder, an air supply tube for injecting air into the container, and a discharge tube for discharging a mixture of the powder and air to the outside. The discharge tube is arranged coaxially with and around the air supply tube such that the air supply tube extends within the discharge tube. Both the discharge tube and the air supply tube are formed as straight tubes extending vertically through a bottom part of the cylinder-shaped container for connecting the outside with the inside of the container. The respective outlet and inlet openings of the air supply tube and the discharge tube are located in a central part of the container.

EP 1 745 747 A1 discloses a powder-mixed gas generator provided in a container which defines a spherical chamber, and a gas supply line which branches into two lines within the container. Each of the two lines has a nozzle provided at the end thereof. Each nozzle has five outlet ports arranged on the top, bottom, right and left sides of the nozzle at 90° intervals and each nozzle is spaced apart from the inner wall of the spherical chamber.

KR 2010 0008362 U 23 discloses an abrasive powder-mixed gas generator for grinding teeth. A container defines a spherical chamber and an air supply pipe extends into the spherical chamber and terminates at a position spaced apart from the inner walls of the container. The distal end section of the air supply pipe is provided with multiple air spouting balls provided in the side walls of the distal end section of the air supply pipe.

### SUMMARY OF THE INVENTION

### PROBLEMS TO BE SOLVED BY THE INVENTION

It is an object of the present invention to provide a powder-mixed-gas generator that can stabilize the discharge amount of the powder with less clogging.

### SOLUTION TO THE PROBLEMS

According to the present invention, there is provided a powder-mixed-gas generator according to claim 1.

### ADVANTAGES OF THE INVENTION

The powder-mixed-gas generator has a chamber defined by a vessel, the chamber having a shape that resembles a sphere, a gas injector provided in the vessel, and a mixture-gas discharger provided in the vessel, and has a simple structure as a whole, which results in eliminating the concern of clogging.

Furthermore, since the distal part of the gas injector is in parallel with the hemispherical surface, the gas injected from the gas injector forms a circulation stream that circulates in the space inside the vessel and mixes the powder in contact with the circulation stream with the gas to form the mixture gas. In the space inside the vessel, a first region in which the circulation stream flows and a second region in which the circulation stream does not flow are formed. When part of the powder is removed from the first region by discharging through the mixture-gas discharger, the powder is automatically supplied from the second region to the first region.

Therefore, according to the present invention, there is provided a powder-mixed-gas generator that can stabilize the discharge amount of the powder with less clogging.

The powder is a tooth-surface-cleaning powder. The powder-mixed-gas generator can be used arbitrarily according to claim 1, whereas the use thereof is limited to cleaning for teeth surfaces according to claim 5.

Since the discharge amount of the powder is stabilized, there will be no concern of discomforting the operator.

Therefore, the present invention can promote the spread of powder-mixed-gas generators for cleaning of teeth surfaces.

Since the mixture-gas discharger in the powder-mixed-gas generator is provided with a mixture-gas suction port and the mixture-gas suction port is provided with an opening that faces a direction in which the circulation stream flows, the opening can receive the circulation stream that is made by the gas injector to circulate inside the space and the discharge amount of the powder can be stabilized.

The space in the chamber includes a first region in which the circulation stream flows and a second region in which the circulation stream does not flow, and when the powder is removed from the first region, the powder is automatically supplied from the second region to the first region. Accordingly, the discharge amount of the powder can be further stabilized.

### BRIEF DESCRIPTION OF THE DRAWINGS

Fig. 1 is a perspective view of a tooth-surface-cleaning apparatus.
Fig. 2 is a view for showing the appearance of a powder-mixed-gas generator according to an embodiment of the present invention.
Fig. 3 is a cross-sectional view of the powder-mixed-gas generator.
Fig. 4 is a view for explaining the shape of a chamber.
Fig. 5 is a view for explaining a relationship between a gas injector and a mixture-gas discharger.
Fig. 6 is a view taken along line 6 in Fig. 3.
Fig. 7 is a view taken along line 7 in Fig. 3.
Fig. 8 is a view for explaining an operation of the powder-mixed-gas generator.
Fig. 9 is a view for explaining the operation of the powder-mixed-gas generator.

### MODE FOR CARRYING OUT THE INVENTION

Hereinafter, with reference to the accompanying drawings, an embodiment of the present invention will be described.

### EMBODIMENT

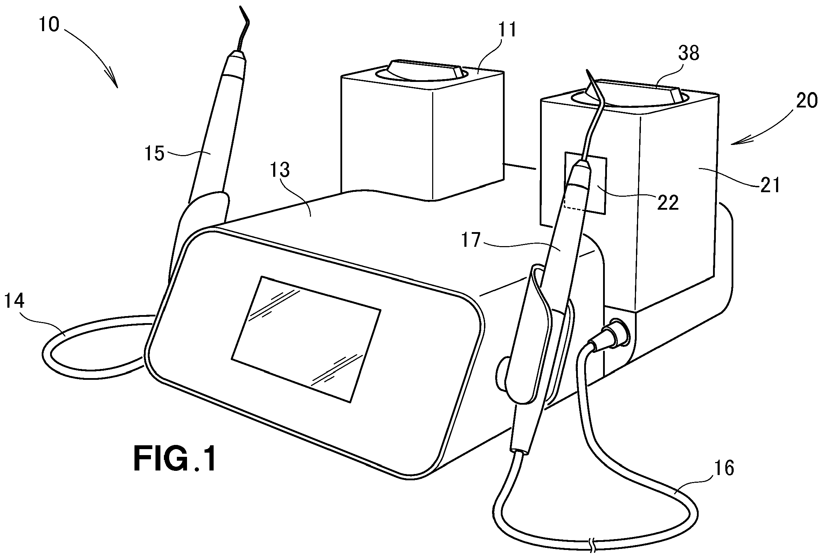

As shown in Fig. 1, a tooth-surface-cleaning apparatus 10 includes a box-type control unit 13 including a water tank 11 and a powder-mixed-gas generator 20; a first tube 14 extending from the control unit 13; a dental-scaling handpiece 15 connected to the distal end of the first tube 14; a second tube 16 extending from the control unit 13; and a tooth-surface-cleaning handpiece 17 connected to the distal end of the second tube 16.

Dental calculus is separated from the tooth by ultrasonic vibration of the dental-scaling handpiece 15 with water supply from the water tank 11, and is removed by the water.

The tooth-surface-cleaning handpiece 17 receives a supply of a mixture gas in which a powder is mixed with a gas from the powder-mixed-gas generator 20, and fulfills a role for injecting the mixture gas onto teeth surfaces.

The powder-mixed-gas generator 20 is contained in a box-type case 21. A transparent inspection window 22 is fitted to the front surface of the case 21 for confirming the residual quantity of the powder through the inspection window 22.

Hereinafter, the powder-mixed-gas generator 20 will be described in detail.

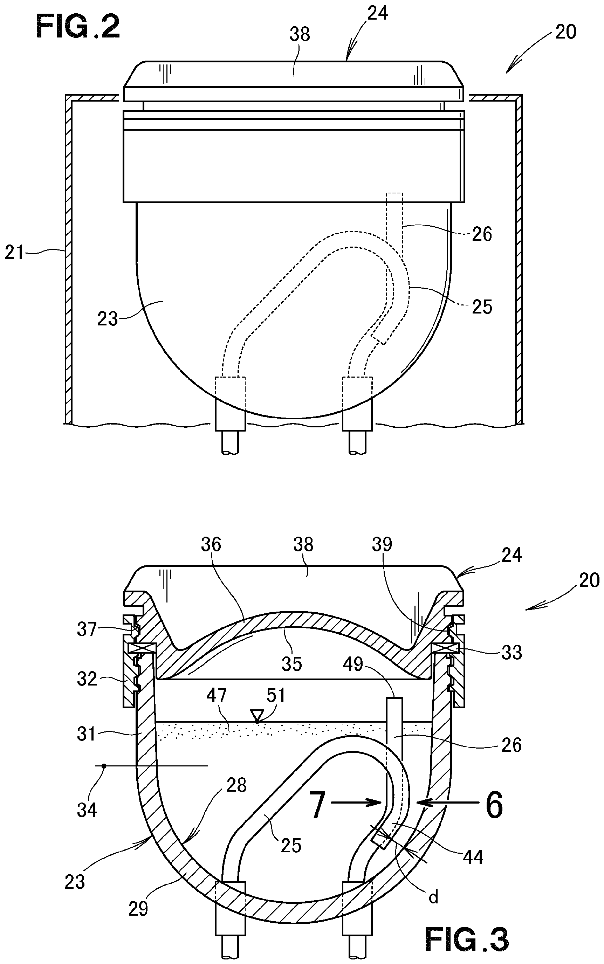

As shown in Fig. 2, the powder-mixed-gas generator 20 includes a vessel body 23 having a bottom that is a hemispherical shell, a lid 24 for closing a top opening of the vessel body 23, a gas injector 25 attached to the vessel body 23, and a mixture-gas discharger 26 attached to the vessel body 23. In other words, the vessel includes the vessel body 23 and the lid 24.

As shown in Fig. 3, the vessel body 23 includes a hemispherical shell section 29 of which the inner surface is a hemispherical surface 28, a cylindrical section 31 extending upward from the hemispherical shell section 29, a lid-fixing ring 32 mounted on the top of the cylindrical section 31, and a packing 33 fitted to the lid-fixing ring 32 and placed on the top surface of the cylindrical section 31. The hemispherical shell section 29 and the cylindrical section 31 constitute a single continuous unit although the curved line and the straight line are isolated by a line 34.

The lid 24 includes a lid body 36 of which the lower surface is a curved surface 35, a male thread 37 formed around the lid body 36, and a finger grip section 38 bridging over the lid body 36. By pinching and twisting the finger grip section 38, the male thread 37 is screwed into a female thread 39 provided at the lid-fixing ring 32 and is loosened from the female thread 39.

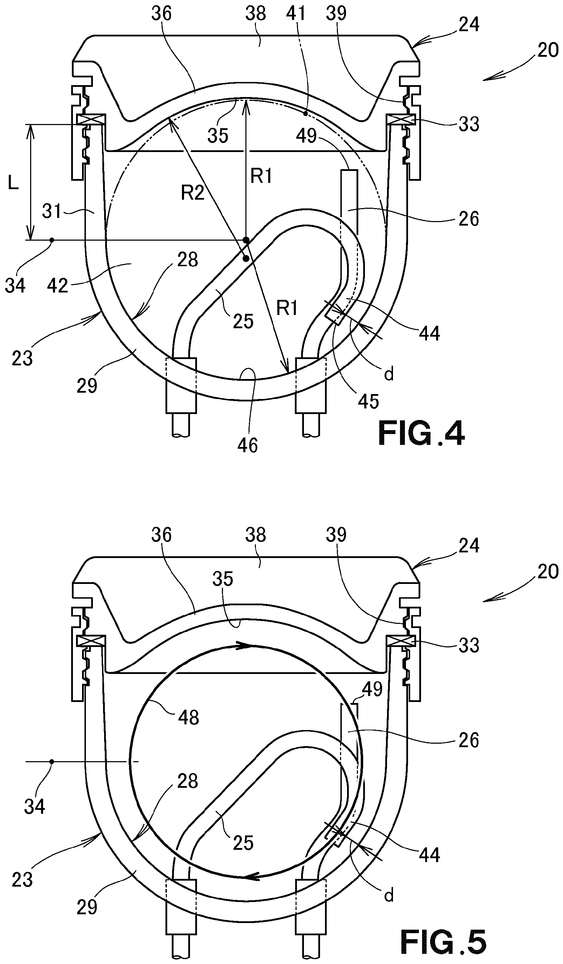

As shown in Fig. 4, let us assume that the radius of the hemispherical surface 28 is R1. The lid body 36 is arranged so as to be brought into contact with an imaginary circle 41 described with the radius R1 from outside. As a result, a chamber 42 within the vessel body 23 becomes to have a shape resembling the circle with the radius R1.

The cylindrical section 31 is essential for mounting the lid-fixing ring 32, but it is preferable that the axial length L thereof be small. In this embodiment, L is 0.8 times R1, but L can be selected from a range in which 0.6 ≤ (L/R1) ≤ 0.9. It is not preferable that L be greater than 0.9 times R1 since it will be difficult for the chamber 42 to have a shape resembling a circle. It is not preferable that L be less than 0.6 times R1 since it will be difficult to attach the lid-fixing ring 32.

The radius R2 of the curved surface 35 of the lid body 36 is decided to be greater than the radius R1. By deciding that R1 < R2, the height of the lid 24 can be small, so that the powder-mixed-gas generator 20 can be downsized. However, since the chamber 42 should have a shape resembling a circle, it is recommended that R2 be selected from a range in which 1.1 ≤ (R2/R1) ≤ 1.3.

The gas injector 25 is, for example, a J-shaped tube of which the distal part 44 is arranged in parallel to the hemispherical surface 28 with a uniform distance "d" between the distal part 44 and the hemispherical surface 28. An injection opening 45 of the gas injector 25 is directed to (substantially the center of) the bottom 46 of the hemispherical surface 28. The distance "d" is selected from a range in which "d" is 0.5 to 1.5 times the outer diameter of the distal part 44.

If the distance "d" is less than 0.5 times the outer diameter of the distal part 44, there may be a risk that the gap between the hemispherical surface 28 and the distal part 44 is clogged up with powder 47. If the distance "d" is greater than 1.5 times the outer diameter of the distal part 44, it will be difficult to form a gas flow (denoted by symbol 48 in Fig. 5) along the hemispherical surface 28.

The powder 47 is, for example, a tooth-surface-cleaning powder made of calcium carbonate or sodium carbonate of which the average particle diameter is 50 to 80 micrometers.

The mixture-gas discharger 26 is arranged along the wall of the cylindrical section 31, so as to be capable of receiving the powder 47 flowing along the curved surface 35 of the lid body 36.

More specifically, as shown in Fig. 5, the mixture-gas discharger 26 is arranged, such that a mixture-gas suction port 49 of the mixture-gas discharger 26 overlaps (including substantially overlaps) an operational circle 48 that passes through the distal part 44 of the gas injector 25 and is parallel with the hemispherical surface 28. It is expected that pressurized gas flows along the operational circle 48.

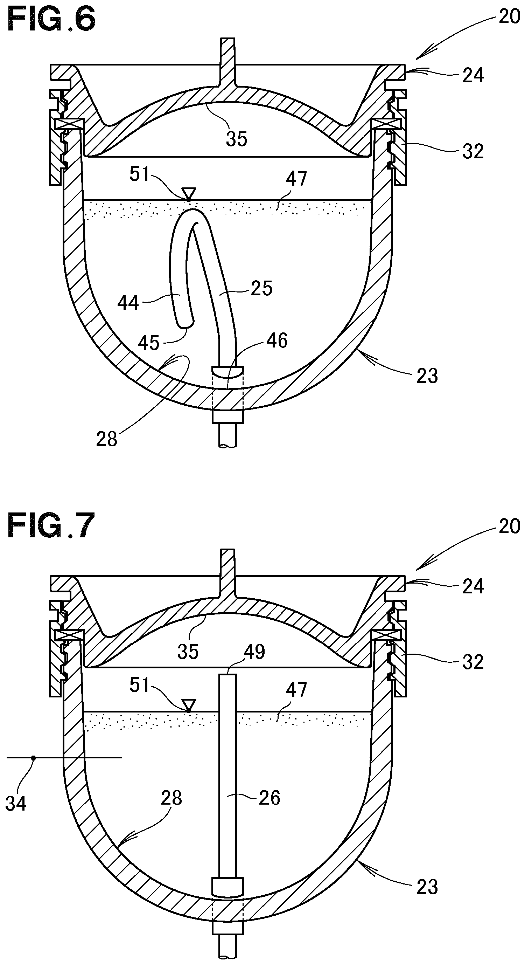

As shown in Fig. 6, the gas injector 25 is bent for avoiding interference with the mixture-gas discharger 26, but the injection opening 45 of the gas injector 25 is directed to (substantially the center of) the bottom 46 of the hemispherical surface 28.

As shown in Fig. 7, the mixture-gas discharger 26 is upwardly elongated to an intermediate position between the hemispherical surface 28 (line 34) and the curved surface 35, and the distal end of the mixture-gas discharger 26 is always located above the upper-limit level 51 for the powder 47. This location of the distal end of the mixture-gas discharger 26 ensures that the stored powder 47 is prevented from directly entering the mixture-gas suction port 49.

The mixture-gas suction port 49 may be provided by cutting the tube obliquely to the axis of the tube, but is provided by cutting the tube perpendicularly with respect to the axis of the tube in this embodiment. In comparison with oblique cutting, this significantly facilitates the cutting process and can reduce the process cost.

Next, operation of the powder-mixed-gas generator 20 with the above-described structure will be described.

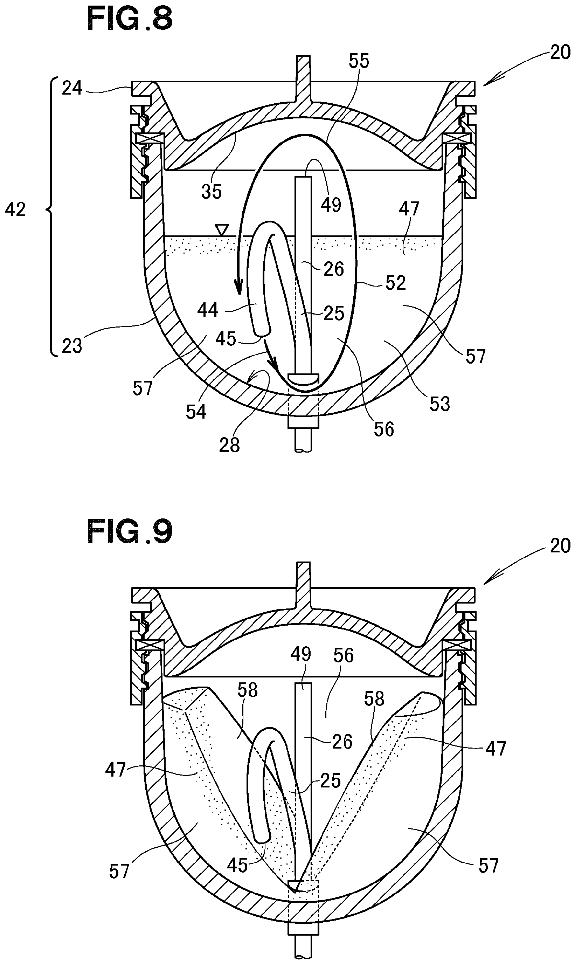

As shown in Fig. 8, the powder-mixed-gas generator 20 includes the chamber 42 having a space 53 for containing the powder 47 (the chamber 42 having the vessel body 23 and the lid 24), the gas injector 25 located within the chamber 42 for injecting gas 54, and the mixture-gas discharger 26 for discharging a mixture gas 55 in which the gas 54 and the powder 47 is mixed to the outside.

Here, the gas injector 25 injects the gas 54, thereby forming a circulation stream 52 that circulates inside the space 53. The mixture-gas discharger 26 is located in the path along which the circulation stream 52 flows.

In this structure, the gas injector 25 injects the gas 54 so that the circulation stream 52 flows along a vertical plane (a plane that is substantially perpendicular to a horizontal plane) passing the inside of the space 53.

In the above-mentioned powder-mixed-gas generator 20, the space 53 is considered to have a first region 56 in which the circulation stream 52 flows and second regions 57 in which the circulation stream 52 does not flow. In the first region 56, the powder 47 is in contact with the circulation stream 52, so that the powder 47 and the gas 54 are mixed to form the mixture gas 55.

In the second regions 57, the powder 47 that has not been included in the mixture gas 55 is stored. When the powder 47 is removed from the first region 56 in response to discharge of the mixture gas 55, the remaining powder 47 becomes to have a shape as shown in Fig. 9, and the powder 47 in the second regions 57 is automatically supplied to the first region 56.

More specifically, in the second regions 57, the powder 47 is stored to have planes 58 oblique to the above-mentioned vertical plane. When the powder 47 is removed from the first region 56 in response to discharge of the mixture gas 55, the powder 47 in the second regions 57 moves from the second regions 57 to the first region 56 along the planes 58 that incline with respect to the vertical plane.

As shown in Fig. 8, the above-mentioned chamber 42 includes the hemispherical surface 28 and the curved surface 35 that assist the flow of the circulation stream 52 circulating in the space 53. In this structure, the first region 56 utilizes the circulation stream 52 to return the mixture gas 55 to the gas injector 25 along the hemispherical surface 28 and the curved surface 35.

The above-mentioned gas injector 25 includes the injection opening 45 located near the side part of the hemispherical surface 28. The injection opening 45 injects the gas 54 toward the powder 47 contained in the space 53 of the chamber 42. Accordingly, in the first region 56, the gas 54 injected toward the powder 47 and the powder 47 are mixed to form the mixture gas 55. The mixture gas 55 circulates riding the circulation stream 52, and part of it is discharged. The mixture gas 55 that is not discharged is returned to the gas injector 25 along the hemispherical surface 28 and the curved surface 35 by means of the circulation stream 52.

The above-mentioned mixture-gas discharger 26 includes a mixture-gas suction port 49 for receiving the mixture gas 55. The mixture-gas suction port 49 includes an opening that faces the direction in which the circulation stream 52 flows (see also Fig. 5).

In the above-mentioned powder-mixed-gas generator 20, the powder 47 is stored in the space 53 as shown in Fig. 8 in the initial state before the gas 54 is injected from the gas injector 25. In other words, in the initial state, the powder 47 is contained substantially uniformly in the whole region corresponding to each of the first region 56 and the second regions 57.

Thereafter, in response to the start of injection of the gas 54 from the gas injector 25, part of the powder 47 in the first region 56 is mixed with the gas 54. At this time, the remaining powder 47 in the first region 56 is fed to the second regions 57.

Although the powder-mixed-gas generator 20 of this embodiment is preferable for the tooth-surface-cleaning apparatus 10, it can be used in a task of cleaning things other than teeth, for example, elements of a precision machine.

In addition, the structure of the present invention may be applied to a generating apparatus for generating a powder-mixed-gas for transferring powder in, for example, a plant for transferring powder.

### DESCRIPTION OF REFERENCE SYMBOLS

- 10:: Tooth-Surface-Cleaning Apparatus
- 11:: Water Tank
- 13:: Control Unit
- 14:: First Tube
- 15:: Dental-Scaling Handpiece
- 16:: Second Tube
- 17:: Tooth-Surface-Cleaning Handpiece
- 20:: Powder-Mixed-Gas Generator
- 21:: Case
- 22:: Inspection Window
- 23:: Vessel Body of Vessel
- 24:: Lid of Vessel
- 25:: Gas Injector
- 26:: Mixture-gas Discharger
- 28:: Hemispherical Surface
- 29:: Hemispherical Shell Section
- 31:: Cylindrical Section
- 32:: Lid-Fixing Ring
- 33:: Packing
- 34:: Line
- 35:: Curved Surface
- 36:: Lid Body
- 37:: Male Thread
- 38:: Finger Grip Section
- 39:: Female Thread
- 41:: Imaginary Circle
- 42:: Chamber
- 44:: Distal Part of Gas Injector
- 45:: Injection Opening
- 46:: Bottom of Hemispherical Surface
- 47:: Powder
- 48:: Operational Circle
- 49:: Mixture-gas Suction Port
- 51:: Upper-Limit Level for Stored Powder (Initial State)
- 53:: Space
- 54:: Gas
- 55:: Mixture Gas
- 56:: First Region
- 57:: Second Region
- 58:: Oblique Plane

## Claims

1. A powder-mixed-gas generator (20) capable of supplying an amount of powder (47) suitable to stabilize the discharge amount of powder from a vessel storing the powder (47) to outside, the generator (20) comprising:
a chamber (42) having a space (53) for containing the powder (47);
a gas injector (25) located within the chamber (42) and configured to inject gas (54); and
a mixture-gas discharger (26) configured to discharge a mixture gas (55) in which the gas (54) and the powder (47) is mixed to outside,
the gas injector (25) injecting the gas (54), thereby forming a circulation stream (52) that circulates inside the space (53),
the mixture-gas discharger (26) including a mixture-gas suction port (49) for receiving the mixture gas (55), the mixture-gas suction port (49) having an opening which is arranged to face a direction in which the circulation stream (52) flows, wherein
the chamber (42) having the space (53) includes a hemispherical surface (28) and a curved surface (35) that assist the flow of the circulation stream (52) in the space (53), **characterized in that** the circulation stream (52) flows along a vertical plane, and wherein
the space (53) comprises a first region (56) in which the circulation stream (52) flows and a second region (57) in which the circulation stream (52) does not flow,
the gas injector (25) includes an injection opening (45) located near the side part of the hemispherical surface (28) and injects the gas (54) toward the powder (47) contained in the space (53) of the chamber (42), thus the powder (47) and the gas (54) are mixed to form the mixture gas (55) in the first region (56),
the powder (47) that has not been included in the mixture gas (55) is stored in the second region (57),
wherein, when the powder (47) is removed from the first region (56) in response to discharge of the mixture gas (55), the powder (47) in the second region (57) is automatically supplied to the first region (56) by moving from the second region (57) to the first region (56) along the planes (58) that incline with respect to the vertical plane, and
wherein a distal part (44) of the gas injector (25) is bent to be parallel with the hemispherical surface (28) and is elongated into the chamber (42) so that the gas (54) injected therefrom is directed to a bottom (46) of the hemispherical surface (28).

2. The powder-mixed-gas generator (20) according to claim 1, wherein the chamber (42) has a shape resembling a sphere as a whole having a bottom being a hemispherical surface (28) and a ceiling being a curved surface (35).

3. The powder-mixed-gas generator (20) according to claim 1 or 2, wherein the gas injector (25) is configured to inject the gas (54) into the chamber (42), wherein the mixture-gas discharger (26) is configured to discharge the amount of the powder (47) suitable to stabilize the discharge amount of powder together with the gas (54).

4. The powder-mixed-gas generator (20) according to one of the preceding claims, wherein the mixture-gas suction port (49) of the mixture-gas discharger (26) is arranged along a wall of the chamber (42) for receiving the powder (47) flowing along the curved surface (35).

5. The powder-mixed-gas generator (20) according to one of the preceding claims, wherein the powder (47) is a tooth-surface-cleaning powder.

## Patentansprüche

1. Pulvermischgas-Generator (20), der in der Lage ist, eine Menge eines Pulvers (47) bereitzustellen, die geeignet ist, um die Abgabemenge des Pulvers aus einem Behälter, der das Pulver (47) speichert, nach außen zu stabilisieren, wobei der Generator (20) folgendes aufweist:
eine Kammer (42) mit einem Raum (53) zur Aufnahme des Pulvers (47);
eine Gas-Einspritzvorrichtung (25), die in der Kammer (42) angeordnet ist, und die eingerichtet ist, um Gas (54) einzuspritzen; und
eine Mischgas-Austragvorrichtung (26), die eingerichtet ist, um ein Mischgas (55), in dem das Gas (54) und das Pulver (47) vermischt sind, nach außen auszutragen,
wobei die Gas-Einspritzvorrichtung (25) das Gas (54) so einspritzt, dass eine Zirkulationsströmung (52) erzeugt wird, die in dem Raum (53) zirkuliert,
wobei die Mischgas-Austragvorrichtung (26) einen Mischgas-Ansauganschluss (49) zum Aufnehmen des Mischgases (55) aufweist, wobei der Mischgas-Ansauganschluss (49) eine Öffnung aufweist, die so angeordnet ist, dass sie einer Richtung gegenüberliegt, in der die Zirkulationsströmung (52) fließt,
wobei die Kammer (42), die den Raum (53) aufweist, eine halbkugelförmige Fläche (28) und eine gekrümmte Fläche (35) aufweist, die das Fließen der Zirkulationsströmung (52) in dem Raum (53) unterstützen,
**dadurch gekennzeichnet, dass**
die Zirkulationsströmung (52) entlang einer vertikalen Ebene fließt, und wobei
der Raum (53) einen ersten Bereich (56) aufweist, in dem die Zirkulationsströmung (52) fließt, und einen zweiten Bereich (57) aufweist, in dem die Zirkulationsströmung (52) nicht fließt,
die Gas-Einspritzvorrichtung (25) eine Einspritzöffnung (45) aufweist, die sich nahe dem seitlichen Abschnitt der halbkugelförmigen Fläche (28) befindet, und die das Gas (54) in Richtung des Pulvers (47), das in dem Raum (53) der Kammer (42) enthalten ist, einspritzt, sodass das Pulver (47) und das Gas (54) vermischt werden, um das Mischgas (55) in dem ersten Bereich (56) zu erzeugen,
das Pulver (47), das nicht dem Mischgas (55) hinzugefügt wurde, in dem zweiten Bereich (57) gespeichert wird,
wobei, wenn das Pulver (47) aus dem ersten Bereich (56) in Reaktion auf das Austragen des Mischgases (55) entfernt wird, das Pulver (47) in dem zweiten Bereich (57) automatisch dem ersten Bereich (56) zugeführt wird, indem es von dem zweiten Bereich (57) zu dem ersten Bereich (56) entlang der Ebenen (58), die bezüglich der vertikalen Ebene geneigt sind, bewegt wird, und
wobei ein distaler Abschnitt (44) der Gas-Einspritzvorrichtung (25) so gekrümmt ist, dass er parallel zur halbkugelförmigen Oberfläche (28) verläuft und sich derart in der Kammer (42) erstreckt, dass das Gas (54), das von dort eingespritzt wird, auf einen Bodenabschnitt (46) der halbkugelförmigen Fläche (28) geleitet wird.

2. Pulvermischgas-Generator (20) nach Anspruch 1, wobei die Kammer (42) eine Form hat, die als Ganzes eine Kugel nachbildet, mit einem Bodenabschnitt, der eine halbkugelförmige Fläche (28) ist, und einem Deckenabschnitt, der eine gekrümmte Fläche (35) ist.

3. Pulvermischgas-Generator (20) nach Anspruch 1 oder 2, wobei die Gas-Einspritzvorrichtung (25) so eingerichtet ist, um das Gas (54) in die Kammer (42) einzuspritzen, wobei die Mischgas-Austragvorrichtung (26) so eingerichtet ist, um die Menge des Pulvers (47) auszutragen, die geeignet ist, um die Austragmenge des Pulvers zusammen mit dem Gas (54) zu stabilisieren.

4. Pulvermischgas-Generator (20) nach einem der vorhergehenden Ansprüche, wobei der Mischgas-Ansauganschluss (49) der Mischgas-Austragvorrichtung (26) entlang einer Wand der Kammer (42) angeordnet ist, um das Pulver (47) aufzunehmen, das entlang der gekrümmten Fläche (35) fließt.

5. Pulvermischgas-Generator (20) nach einem der vorhergehenden Ansprüche, wobei das Pulver (47) ein Zahnflächen-Reinigungspulver ist.

## Revendications

1. Générateur (20) de gaz mélangé à de la poudre capable de fournir une quantité de poudre (47) convenant pour stabiliser la quantité d'éjection de poudre à l'extérieur à partir d'un récipient conservant la poudre (47), le générateur (20) comprenant :
une chambre (42) présentant un espace (53) pour contenir la poudre (47) ;
un injecteur de gaz (25) situé à l'intérieur de la chambre (42) et configuré pour injecter du gaz (54) ; et
un éjecteur de gaz-mélange (26) configuré pour éjecter à l'extérieur un gaz mélange (55) dans lequel le gaz (54) et la poudre (47) sont mélangés, l'injecteur de gaz (25) injectant le gaz (54), formant ainsi un courant de circulation (52) qui circule à l'intérieur de l'espace (53),
l'éjecteur de gaz-mélange (26) comportant un orifice (49) d'aspiration de gaz-mélange pour recevoir le gaz mélange (55), l'orifice (49) d'aspiration de gaz-mélange présentant une ouverture qui est agencée pour faire face à une direction dans laquelle le courant de circulation (52) s'écoule,
dans lequel la chambre (42) présentant l'espace (53) possède une surface hémisphérique (28) et une surface courbe (35) qui aide l'écoulement du courant de circulation (52) dans l'espace (53),
**caractérisé en ce que**
le courant de circulation (52) s'écoule le long d'un plan vertical, l'espace (53) comprenant une première région (56) dans laquelle le courant de circulation (52) s'écoule et une seconde région (57) dans laquelle le courant de circulation(52) ne s'écoule pas,
l'injecteur de gaz (25) comporte une ouverture d'injection (45) située près de la partie latérale de la surface hémisphérique (28) et injecte le gaz (54) vers la poudre (47) contenue dans l'espace (53) de la chambre (42), de telle sorte que la poudre (47) et le gaz (54) sont mélangés pour former le gaz mélange (55) dans la première région (56),
la poudre (47) qui n'a pas été inclue dans le gaz mélange est conservée dans la seconde région (57),
dans lequel, lorsque la poudre (47) est extraite de la première région (56) en réponse à une éjection du gaz mélange (55), la poudre (47) dans la seconde région (57) est automatiquement acheminée à la première région (56) en se déplaçant de la seconde région (57) à la première région (56) le long des plans (58) qui s'inclinent par rapport au plan vertical, et
dans lequel une partie distale (44) de l'injecteur de gaz (25) est pliée pour être parallèle à la surface hémisphérique (28) et est étendue dans la chambre (42) de sorte que le gaz (54) injecté à partir de celle-ci est dirigé vers un fond (46) de la surface hémisphérique (28).

2. Générateur (20) de gaz mélangé à de la poudre suivant la revendication 1, dans lequel la chambre (42) a une forme ressemblant à une sphère dans son ensemble ayant un fond qui est une surface hémisphérique (28) et un plafond qui est une surface courbe (35).

3. Générateur (20) de gaz mélangé à de la poudre suivant la revendication 1 ou 2, dans lequel l'injecteur de gaz (25) est configuré pour injecter le gaz (54) dans la chambre (42), et dans lequel l'éjecteur de gaz-mélange (26) est configuré pour éjecter la quantité de la poudre (47) convenant pour stabiliser la quantité d'éjection de poudre en commun avec le gaz (54).

4. Générateur (20) de gaz mélangé à de la poudre suivant l'une des revendications précédentes, dans lequel l'orifice (49) d'aspiration de gaz-mélange de l'éjecteur de gaz mélange (26) est disposé le long d'une paroi de la chambre (42) pour recevoir la poudre (47) s'écoulant le long de la surface courbe (35).

5. Générateur (20) de gaz mélangé à de la poudre suivant l'une des revendications précédentes, dans lequel la poudre (47) est une poudre de nettoyage de surface de dent.
